# EUROPÄISCHE PATENTANMELDUNG

(11) **EP 1 623 888 A1**
(43) Veröffentlichungstag der Anmeldung: **08.02.2006**
(21) Anmeldenummer: 05107290.8
(22) Anmeldetag: 08.08.2005
(51) Int. Cl.: B60R 21/20

(54) **Dichtelement für Gasgenerator**

(30) Priorität: 06.08.2004 AT 5672004 U
(71) Anmelder: iSi Airbag GmbH, 1210 Wien (AT)
(72) Erfinder: Schäfer, Dietmar, 1130, Wien (AT)
(74) Vertreter: KLIMENT & HENHAPEL

(57) **Zusammenfassung**

Zerstörbares Dichtelement (1) eines Gasgenerators zum Aufblasen eines Gassacks (8), insbesondere eines Airbags, wobei der Gasgenerator einen Gasdruckbehälter (7) umfasst, dessen Ausströmöffnung (10) mittels des zerstörbaren Dichtelements (2), welches vorzugsweise als Membran ausgebildet ist, verschlossen ist und wobei das Dichtelement (2) mit definierten Materialstrukturinhomogenitäten (14) versehen ist, welche die Festigkeit des Material des Dichtelementes (2) schwächen. Um ein Dichtelement zu schaffen, das eine geringe Versagenswahrscheinlichkeit aufweist und dennoch verlässlich und reproduzierbar öffnet, ist vorgesehen, dass die Materialstrukturinhomogenitäten (14) ausschließlich in einem an einen den Mittelpunkt (11) des Dichtelementes (1) miteinschließenden Mittenbereich (12) des Dichtelements angrenzenden, vorzugsweise ringförmigen Außenbereich (13) angeordnet sind, und eine in sich geschlossene, den Mittelpunkt (11) der Membran und vorzugsweise den Mittenbereich (12) einschließende Linie bildet.

## Beschreibung

Die vorliegende Erfindung betrifft einen Gasgenerator zum Aufblasen eines Gassacks, insbesondere eines Airbags mit einem Gasdruckbehälter, dessen Ausströmöffnung mittels eines zerstörbaren Dichtelements, vorzugsweise einer Membran verschlossen ist.

Solche Gasgeneratoren dienen dazu, im Funktionsfall mittels gespeichertem Gas einen damit verbundenen Gassack, beispielsweise einen Airbag in einem Auto, aufzublasen.

In der Regel erfolgt die Auslösung des Aufblasevorgangs durch das Überschreiten eines Verzögerungsgrenzwertes. Durch einen elektrischen Impuls wird in weiterer Folge eine pyrotechnische Zündladung gezündet, der die Zerstörung des Dichtelementes bewirkt. Das im Gasdruckbehälter gespeicherte Gas entweicht daraufhin in den mit dem Gasdruckbehälter verbundenen Gassack und bläst diesen auf.

Von besonderer Wichtigkeit dabei ist das einwandfreie Öffnen des Dichtelements. Dies muss reproduzierbar erfolgen, dh. das Öffnen muss seitens des Herstellers garantiert werden können. Bisher bekannte Dichtelemente sind, wie bereits erwähnt, als Membrane ausgebildet und öffnen vorwiegend aufgrund des hohen Innendrucks des im Gasdruckbehälter gespeicherten Gases. Die pyrotechnische Zündladung kann beispielsweise in einer sogenannten Zündpille gespeichert sein. Bei Anlegen einer elektrischen Spannung an die Zündpille explodiert die Zündladung, wobei ein Heißgasstrom sowie Partikel der Zündpille mit hohem Druck auf die Membran geleitet werden, was, in Kombination mit dem hohen Druck im Gasdruckbehälter, zur Zerstörung der Membran führt. Bei bekannten Membranen kann jedoch die Auswirkung der Explosion der pyrotechnischen Zündladung nicht vorhergesehen werden. Mit anderen Worten erfolgt die Art und Weise der Zerstörung der Membran mehr oder weniger unkontrolliert und nicht vorhersagbar. Dies stellt aber einen Unsicherheitsfaktor dar, was die Reproduzierbarkeit des Massenstroms beim Aufblasen des Airbags betrifft. Weiters können durch unkontrolliertes Öffnen einer Membran auch Membranpartikel in den Airbag eingebracht werden, was zu einer Beschädigung des Systems führen kann.

Es ist daher bekannt, die Membran mit Kerbungen zu versehen, welche das Materialgefüge des Dichtelements örtlich begrenzt verändern. Dies Kerbungen erfolgen in Form von sternförmig über den Mittelpunkt der Membran verlaufenden Geraden, weswegen sie auch Kreuzkerbungen genannt werden. Dadurch ist es möglich, die Zerstörung der Membran im Mittelpunkt derselben einzuleiten, wobei die Zerstörung entlang dieser Kreuzkerben fortschreitet.

Diese bekannten Kreuzkerbungen weisen jedoch den Nachteil auf, dass sie durch den höchstbelasteten Punkt der Membran, nämlich deren Mittelpunkt, verlaufen. Da im Betriebszustand der Innendruck des Gasdruckbehälters voll auf der Membran aufliegt, ist deren Mittelpunkt am höchsten belastet. Eine Kerbung im Mittelpunkt der Membran sowie im diesen umgebenden Mittenbereich stellt daher ein erhöhtes Sicherheitsrisiko dar. Weiters wird dafür eine relativ dicke Membrane benötigt, um überhaupt eine Kerbe in diesem Bereich einbringen zu können. Insbesondere bei wechselnder Belastung wie sie z.B. durch die Einwirkung von wechselnden Temperaturen induziert wird, ist hier eine signifikant niedrigere Lebensdauer zu beobachten.

Die US 6 357 792 beschreibt eine Vorrichtung zum Aufblasen eines Gassacks, insbesondere eines Airbags, mit einem Dichtelement, das an seiner Oberfläche mit einer Rille versehen ist. Die Rille folgt einer kreisförmigen Linie, ist jedoch nicht gänzlich geschlossen, sodass nach dem Reißen des Dichtelements entlang der Rille ein mit dem Dichtelement verbundener Lappen verbleibt. Durch eine solche asymmetrische Ausführung wird aber wiederum die Reproduzierbarkeit des Massenstroms beim Aufblasen des Airbags beeinträchtigt.

Es ist die Aufgabe der vorliegenden Erfindung, die genannten Nachteile zu verhindern und ein Dichtelement, insbesondere eine Membran, vorzusehen, die eine geringe Versagenswahrscheinlichkeit aufweist und dennoch verlässlich und reproduzierbar öffnet.

Erfindungsgemäß wird dies durch die kennzeichnenden Merkmale des Anspruchs 1 erreicht.

Dadurch ist es möglich, im höchstbelasteten Bereich der Membran, nämlich im Mittenbereich um den Mittelpunkt, die volle Festigkeit derselben zur Verfügung zu haben, wohingegen im an den Mittenbereich angrenzenden Außenbereich, wo eine geringere Belastung der Membran stattfindet, strukturelle Schwächungen vorgesehen sind, die das reproduzierbare Öffnen der Membran ermöglichen, ohne aufgrund der geringeren Festigkeit die Sicherheit zu gefährden. Die strukturellen Schwächungen bewirken eine inhomogene Spannungsverteilung im erwähnten Außenbereich, was wiederum dazu führt, dass die dort auftretenden Spannungsspitzen im Auslösefall eine reproduzierbare, definierte Zerstörung des Dichtelements zu induzieren. Wichtig dabei ist, dass die Materialstrukturinhomogenitäten der Membran vor Inbetriebnahme, also im Nicht-Betriebszustand beigebracht werden, noch bevor sie ihre abdichtende Funktion im Gasgenerator übernimmt. Gemäß kennzeichnenden Merkmalen des Anspruchs 1 weisen die Materialstrukturinhomogenitäten eine in sich geschlossene Form auf, beispielsweise gemäß kennzeichnenden Merkmalen des Anspruchs 3 die Form eines Vielecks, eines Kreises oder einer Ellipse. Wichtig dabei ist, dass die geschlossene Kontur den Mittelpunkt des Dichtelements und vorzugsweise auch den Mittenbereich einschließt. Die Ausbildung der Materialstrukturinhomogenitäten als Vieleck verbessert das reproduzierbare Öffnen nochmals. In diesem Fall wird ein blütenartiges Öffnen des Dichtelementes ermöglicht.

Die kennzeichnenden Merkmale des Anspruchs 2 beschreiben eine bevorzugte Ausführungsform der Erfindung gemäß welcher der Mittenbereich ein Bereich um den Mittelpunkt des Dichtelementes ist mit einem Durchmesser, der 5% bis 15%, vorzugsweise 7% bis 12% des Durchmessers des gesamten Dichtelementes beträgt. Versuche in der Praxis haben gezeigt, dass dieser Bereich als hochbelasteter Bereich der Membran anzusehen ist. Das Anbringen der erfindungsgemäßen Materialstrukturinhomogenitäten außerhalb dieses Bereichs vermindert daher die Versagenswahrscheinlichkeit beträchtlich und trägt somit stark zur Auslösesicherheit bei.

Die kennzeichnenden Merkmale der Ansprüche 4 bis 6 beschreiben bevorzugte Ausführungsvarianten des erfindungsgemäßen Dichtelements, demnach dieses entweder vollkommen plan ausgeführt sein kann, oder aber bereits ausgebaucht, so dass es einen U-förmigen Querschnitt aufweist. Diese Merkmale gelten jeweils für ein erfindungsgemäßes Dichtelement, welches sich nicht im Betriebszustand befindet, also vor der eigentlichen abdichtenden Funktion des Gasdruckbehälters.

Die kennzeichnenden Merkmale der Ansprüche 7 bis 9 beschreiben bevorzugte Ausführungsvarianten, gemäß welchen die Materialstrukturinhomogenitäten dem Dichtelement beigebracht werden können. Dem Fachmann ist jedoch vollkommen klar, dass sämtliche zur Herstellung von Materialstrukturinhomogenitäten geeignete Verfahren zum Einsatz kommen können.

Gemäß kennzeichnender Merkmale des Anspruchs 9 erfolgt die Materialstrukturinhomogenität in Form einer dem Dichtelement aufgeprägten Kerbe. Die Kerbung kann dabei entweder mittels einer herkömmlichen Prägevorrichtung bzw. durch einen Ziehstempel erzeugt werden, oder aber beispielsweise mittels eines Lasers, der einen Teil der Oberfläche der Membran abträgt bzw Zonen davon wärmebehandelt.

Im Anschluss erfolgt nun eine detaillierte Beschreibung der Erfindung anhand von Ausführungsbeispielen. Dabei zeigen
- Fig.1: eine Schnittansicht eines Gasgenerators
- Fig.2: eine Seitenansicht eines planen Dichtelementes
- Fig.3: eine Seitenansicht eines im Querschnitt U-förmigen Dichtelementes
- Fig.4: eine Seitenansicht eines weiteren im Querschnitt U-förmigen Dichtelementes
- Fig.5 bis Fig.20: Ausführungsformen für Dichtelemente mit unterschiedlichen Kerben

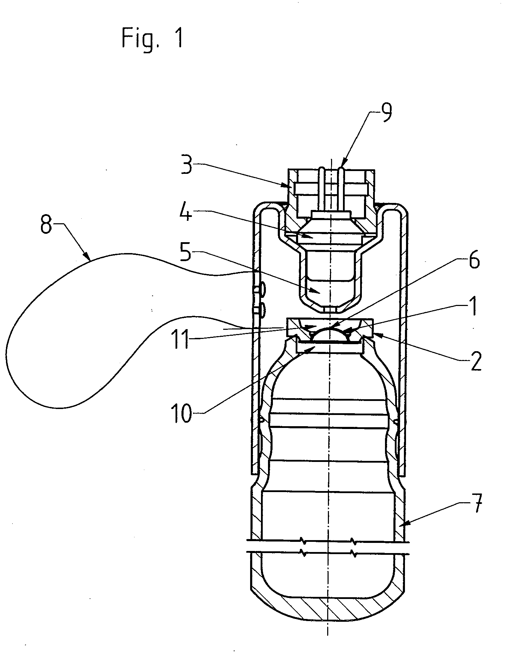

Fig.1 zeigt beispielhaft einen Gasgenerator, wie er zum Aufblasen von Airbags in Kraftfahrzeugen zum Einsatz kommt.

Dieser besteht aus einem Gasdruckbehälter 7 dessen Ausströmöffnung 10 mittels eines Dichtelements 1, vorzugsweise einer Membran, verschlossen ist. Die Membran 1 ist dabei an einem Membranträger 2 befestigt vorzugsweise angeschweißt.

Im Bereich oberhalb der Ausströmöffnung 10 ist ein Öffnungsmechanismus angeordnet, welcher zur Zerstörung der Membran 1 dient und im wesentlichen aus einer Zündpillenhalterung 3, einer Zündpille 4 und einer Düsenkammer 5 besteht.

Bei der Zündpille 4 handelt es sich um einen bekannten Anzünder, dessen wesentlicher Aufbau eine geringe Menge an pyrotechnischer Zündladung in einem Gehäuse aufweist. In die Zündladung sind von außerhalb der Zündpille 4 elektrisch kontaktierbare Zündpins 9 geführt, welche nach Anlegen einer Spannung die Zündladung zünden.

Soll der Gassack 8 aufgeblasen werden, wird zuerst die Zündpille 4 durch Anlegen eines elektrischen Zündimpulses gezündet. Die dabei frei werdende Energie wird in der Düsenkammer 5 gebündelt und als Heißgasstrahl auf die Membran 1 geleitet. Am höchsten Punkt 6 der Membran 1 tritt im Zuge der Druckbelastung durch die Gasfüllung die höchste Spannung auf, wodurch sich dort ihre dünnste Stelle ergibt. Mit anderen Worten ist die Festigkeit der Membran 1 am Punkt 6 am geringsten.

Der bisher beschriebene Gasgenerator entspricht im wesentlichen bereits bekannten Gasgeneratoren, soll jedoch nur beispielhaft die Funktionsweise näher erläutern. In der Praxis existieren eine Vielzahl unterschiedlicher Gasgeneratoren, beispielsweise mit zusätzlichen pyrotechnischen Treibsätzen außerhalb der Zündpille, mit unterschiedlich angeordneten Zündpillen, mit mehreren Gasdruckbehältern, etc.. Die vorliegende erfindungsgemäße Membran 1 kann unabhängig vom den restlichen Merkmalen dieser Gasgeneratoren eingesetzt werden. Wie der Fachmann sofort erkennen kann, ist es lediglich von Bedeutung, dass die Membran 1 ein Ausströmöffnung eines Gasdruckbehälters 7 verschließt.

Durch Einwirkung der durch die Zündladung frei werdenden Energie beginnt die Zerstörung der Membran 1 daher an ihrer exponiertesten Stelle. Die Dynamik des entweichenden, stark komprimierten Gas im Gasspeicher 7 bewirkt in Folge die vollständige Freilegung der Ausströmöffnung 10 und das Abströmen des Gases in den Airbag 8.

Wie bereits erwähnt, erfolgt die Öffnung bei bekannten Membranen nicht vollständig reproduzierbar, weshalb Membranen bekannt sind, die Materialstrukturinhomogenitäten, beispielsweise in Form von Kerben aufweisen, entlang welcher die Zerstörung der Membranen bevorzugt erfolgen soll. Diese bekannten Materialstrukturinhomogenitäten verlaufen geradlinig, sternförmig durch den Mittelpunkt 11 der Membran, somit durch jene Stelle 6, welche der größten Belastung ausgesetzt ist und die geringste Festigkeit aufweist.

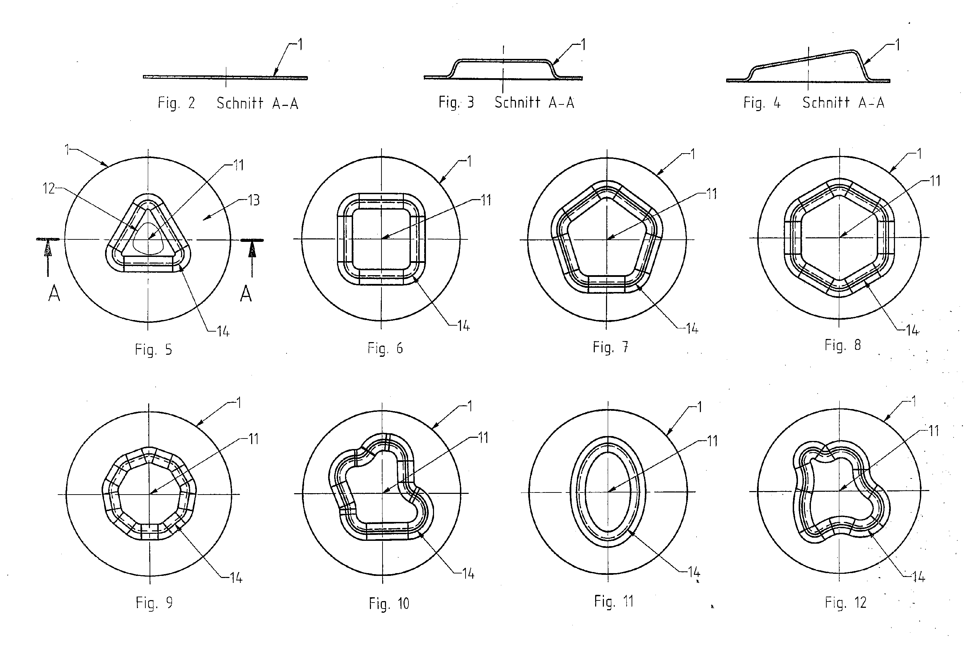

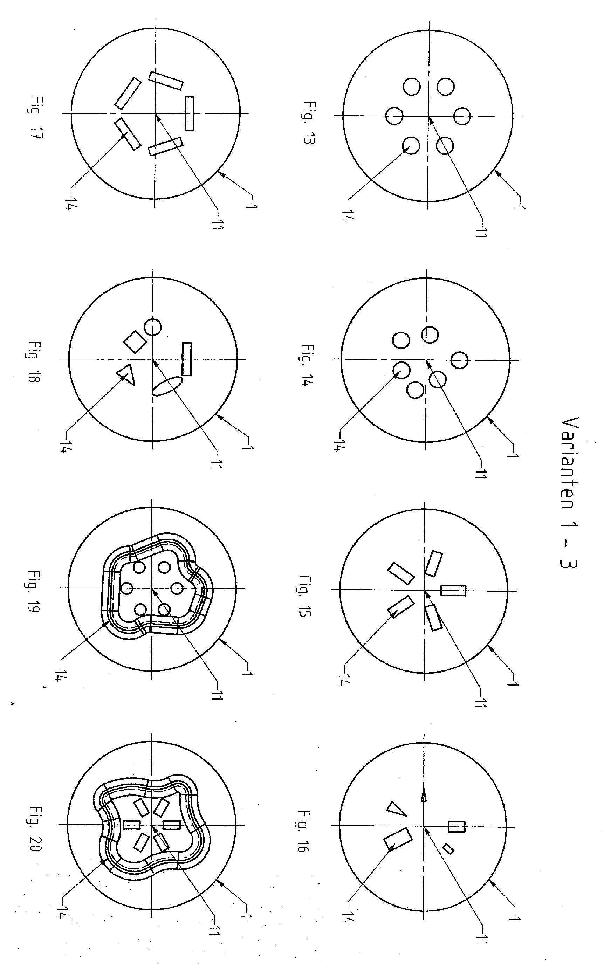

Fig.5 bis Fig.20 zeigen Ausführungsformen von Membranen 1, die Materialstrukturinhomogenitäten in Form von Kerben aufweisen, die jedoch ausschließlich in einem Außenbereich 13 der Membran 1 angeordnet sind. Der Außenbereich 13 ist ein an einen Mittenbereich 12 angrenzender Bereich. Der Mittenbereich 12 ist ein Bereich um den Mittelpunkt 11 der Membran 1, der 5% bis 15%, vorzugsweise 7% bis 12% des Durchmessers der gesamten Membran beträgt.

Hierbei ist anzumerken, dass die beschrieben Membranen in der Regel eine kreisrunde Form besitzen. Für eckige, beispielsweise viereckig geformte Membranen bedeutet dies, dass als Bezug für den Durchmesser der Innkreis der Vierecks herangezogen wird.

Die Materialstrukturinhomogenitäten der Membran 1 werden in den Fig.5 bis Fig.12 erfindungsgemäß durch eine in sich geschlossene Kerbe sicher gestellt, die den Mittenbereich 12, somit also auch den Mittelpunkt 11, vollkommen einschließt.

Es sind aber auch einzelne voneinander isolierte punktförmige, vieleckige, dreieckige, kreisrunde oder elliptische Kerben ausreichend, um im Dichtelement einen inhomogenen Spannungszustand herzustellen, der ein reproduzierbares Öffnen derselben ermöglicht. In den Fig. 13 bis Fig.18 erfolgt die Materialstrukturveränderung durch mehrere vereinzelt angeordnete Kerben, die von vieleckiger, kreisrunder oder elliptischer Form sind.

Bei den in den Fig.19 und Fig.20 offenbarten Materialstrukturinhomogenitäten 14 handelt es sich um eine Kombination aus den aus Fig.5 bis Fig.12 einerseits und Fig.13 bis Fig.17 andererseits bekannten Strutkurinhomogenitäten. Auch sind diese wiederum im Außenbereich 13 angeordnet, der an den Mittenbereich 12 angrenzt.

Sämtlichen Kerben gemeinsam ist der Aufbau einer inhomogenen Spannungsverteilung in der Membran 1, was zu Spannungsspitzen führt, welche die Festigkeit der Membran 1 im Außenbereich 13 verringert, wobei die Festigkeit im höchstbelasteten Punkt 6 der Membran 1 durch die inhomogene Spannungsverteilung nicht verringert wird.

Die in Fig.1 erkennbare Auswölbung der Membran 1 in Richtung Zündpille 4 erfolgt entweder aufgrund des unter Druck stehenden Gases aus dem Gasdruckbehälter 7 oder aber aufgrund einer Vorwölbung der Membran im unbelasteten Zustand in Kombination mit dem unter Druck stehenden Gas aus dem Gasdruckbehälter.

Im ersten Fall wird die Membran 1 vollkommen plan gefertigt, wie dies in Fig.2 dargestellt ist, mit den erfindungsgemäßen Materialstrukturinhomogenitäten versehen und am Membranträger 2 befestigt. Nach Befestigung des Membranträgers 2 am Gasdruckbehälter 7 und Befüllung desselben erfolgt, wird die Membran 2 druckbeaufschlagt und wölbt sich in Richtung Zündpille 4 wie die aus Fig.1 ersichtlich ist.

Im letzten Fall erfolgt eine Vorformung der Membran 1 bei der Herstellung. Fig.3 und Fig.4 zeigen beispielhaft Ausführungen solcher Vorformungen, wobei in Fig.3 die Membran 1 im Querschnitt U-förmig ausgebildet ist und in Fig.14 die beiden Schenkel des U unterschiedlich lang ausgeführt sind. Die bereits vorgeformte Membrane 1 werden in weiterer Folge wieder am Membranträger 2 befestigt und dieser am Gasdruckbehälter 7, der danach befüllt wird, wodurch die Membran druckbeaufschlagt wird und zusätzlich zur Vorformung, welche eine im wesentlichen ebene Auswölbung ergibt, eine Druckverformung entsteht, welche zu einer im wesentlichen halbkugelförmigen Verformung führt (siehe Fig.1).

Die Vorformung der Membran 1 hat den Vorteil, dass dadurch die gezielte Materialstrukturinhomogenität der Membran 1 ziehtechnisch im Herstellungsprozess vorgenommen werden kann, sowie die Form für die weiterverarbeitenden Montageprozesse Vorteile bietet.

## Patentansprüche

1. Zerstörbares Dichtelement (1) eines Gasgenerators zum Aufblasen eines Gassacks (8), insbesondere eines Airbags, wobei der Gasgenerator einen Gasdruckbehälter (7) umfasst, dessen Ausströmöffnung (10) mittels des zerstörbaren Dichtelements (2), welches vorzugsweise als Membran ausgebildet ist, verschlossen ist und wobei das Dichtelement (2) im Nicht-Betriebszustand mit mindestens einer definierten Materialstrukturinhomogenität (14) versehen ist, welche die Festigkeit des Materials des Dichtelementes (2) schwächen, sowie ausschließlich in einem an einen den Mittelpunkt (11) des Dichtelementes (1) miteinschließenden Mittenbereich (12) des Dichtelements angrenzenden, vorzugsweise ringförmigen Außenbereich (13) angeordnet ist, **dadurch gekennzeichnet, dass** die Materialstrukturinhomogenität (14) eine in sich geschlossene, den Mittelpunkt (11) der Membran und vorzugsweise den Mittenbereich (12) einschließende Linie bildet.

2. Zerstörbares Dichtelement nach Anspruch 1, **dadurch gekennzeichnet, dass** der Mittenbereich (12) ein Bereich um den Mittelpunkt (11) des Dichtelementes (1) ist mit einem Durchmesser, der 5% bis 15%, vorzugsweise 7% bis 12% des Durchmessers des gesamten Dichtelementes (1) beträgt.

3. Zerstörbares Dichtelement nach Anspruch 1 oder 2, **dadurch gekennzeichnet, dass** die Linie die Form eines Vielecks, eines Kreises oder einer Ellipse aufweist.

4. Zerstörbares Dichtelement nach einem der Ansprüche 1 bis 3, **dadurch gekennzeichnet, dass** es im Nicht-Betriebszustand als Plättchen, im wesentlichen eben ausgebildet ist.

5. Zerstörbares Dichtelement nach einem der Ansprüche 1 bis 4, **dadurch gekennzeichnet, dass** es im Nicht-Betriebszustand einen im wesentlichen U-förmigen Querschnitt aufweist.

6. Zerstörbares Dichtelement Anspruch 5, **dadurch gekennzeichnet, dass** die beiden Schenkel des U-förmigen Querschnitts unterschiedlich lang ausgebildet sind.

7. Zerstörbares Dichtelement nach einem der Ansprüche Anspruch 1 bis 6, **dadurch gekennzeichnet, dass** die Materialstrukturinhomogenität (14) dem Dichtelement (1) mittels partiellem Glühen beigebracht wird.

8. Zerstörbares Dichtelement nach einem der Ansprüche Anspruch 1 bis 7, **dadurch gekennzeichnet, dass** die Materialstrukturinhomogenität (14) dem Dichtelement (1) ziehtechnisch beigebracht wird.

9. Zerstörbares Dichtelement nach einem der Ansprüche Anspruch 1 bis 6, **dadurch gekennzeichnet, dass** die Materialstrukturinhomogenität (14) in Form einer dem Dichtelement (1) aufgeprägten Kerbe erfolgt.

10. Zerstörbares Dichtelement nach Anspruch 9, **dadurch gekennzeichnet, dass** die Kerbe (14) die Form eines Vielecks, eines Kreises oder einer Ellipse aufweist.
